# EUROPEAN PATENT SPECIFICATION

(11) **EP 4 444 102 B1**
(45) Date of publication and mention of the grant of the patent: **17.09.2025**
(21) Application number: 22835237.3
(22) Date of filing: 08.12.2022
(51) Int. Cl.: F04F 5/46

(54) **CONTINUOUS VAPOR INTEGRATOR**
KONTINUIERLICHER DAMPFINTEGRATOR
INTÉGRATEUR DE VAPEUR CONTINU

(30) Priority: 08.12.2021 DK PA202170603
(43) Date of publication of application: 16.10.2024
(73) Proprietor: H. Kjærbye Invent Aps, Askelien 4 8920 Randers NV (DK)
(72) Inventor: SEGURA REYES, Rodrigo Esteban, 8920 Randers NV (DK); KJÆRBYE, Henrik, 8920 Randers NV (DK); DØLRATH TOFT, Mathias, 8920 Randers NV (DK)
(74) Representative: Høiberg P/S
(86) International application number: PCT/EP2022/084915
(87) International publication number: WO 2023/104942

(56) References cited:
- EP-A1- 2 257 182
- WO-A1-01/39604
- WO-A1-2008/060218
- GB-A- 2 523 277

## Description

### Technical field

The present disclosure relates to a continuous vapor integrator (CVI) for heat treating a product, such as a modular continuous vapor integrator (CVI).

### Background

Vapor integrators are known from food processing industries as well as chemical and medical industries, where heat treatment of a product is carried out e.g. as part of a sanitation treatment to reduce or eliminate the presence of viable microorganisms. For example milk products are subjected to a heat treatment which is also known as pasteurization.

A continuous vapor integrator (CVI) is based on combining or contacting and combining a product stream with a vapor stream, more specifically the product stream and vapor stream are mixed and integrated or incorporated, such that the vapor condenses in the contact zone (i.e. the vapor integration (VI) zone), whereby the product is heated by the condensation energy. Typically the vapor is steam, and the resulting condensate water. Accordingly, the system may also be referred to as a direct steam injector (DSI).

GB2036534 discloses a steam injector comprising a T-shaped body, where a product is injected perpendicularly into a steam flow. Thus, the T-intersection forms an open mixing region, where the perpendicular product channel meets the steam channel, which continues into a steam mixture channel after the mixing region. The shape of the channels have a passage of constant cross section immediately before the mixing region, such as the passage 9 of the steam channel.

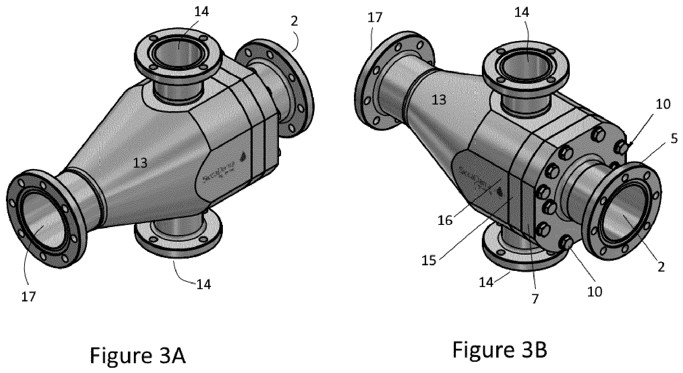

EP2257182 discloses a steam injector with an inlet for product 3 and an inlet for steam 5. The product outlet occurs at a first gap 13, and the steam outlet at a second gap 14, where both gaps exit into an open mixing chamber defined by a recess 9 in front of an injector body 6, as shown in Figures 3-4.

To improve the cost efficiency and environmental impact of a heat treatment process, there is a need for more flexible and efficient vapor integrators, and particularly vapor integrators that are easier to install and maintain during an extended lifetime.

### Summary

The present disclosure provides a continuous vapor integrator (CVI) with an improved vapor integration step including reduced noise pollution, thereby providing a safer working environment.

This is obtained by combining or contacting a product flow path and a vapor channel at an angle at a transition section defined by a central channel wall, such that the central channel wall forms a Coanda surface for the combined/integrated mixed product flow. Thus, the mixing of product and steam occurs at the narrow flow of product along the Coanda surface, and the mixing and integration therefore occurs completely, instantaneously and without boiling and cavitation prior to the outlet opening and/or the outlet opening for heated product. Preferably, the product flow path and a vapor channel is combined in an annular arrangement, such that the Coanda surface may form a curved plane, such as a section of a cone surface. Alternatively, the product flow path and a vapor channel are wedge shaped, such that the Coanda surface may form an essentially planar plane.

Hence, a first, non-claimed, aspect of the disclosure relates to a continuous vapor integrator (CVI) for heat treating a product, comprising:
- a product flow channel having a convergent product inlet section 3 and a divergent product outlet section 18 with a centre line C defining a product flow path, wherein the inlet and outlet sections are separated by a transition section T defined by a central channel wall 8,
- one or more vapor channels 14 contacting the product flow path at a first acute angle at the transition section T, such that the central channel wall 8 forms a Coanda surface for the product flow within the transition section.

In a preferred embodiment, the one or more vapor channels are annular or circular, and particularly the vapor channels comprise an annular inlet into the transition section. Further preferably, the convergent product inlet section and the divergent product outlet section are annular at the entrance and exit to the transition section. Alternatively, the one or more vapor channels, the convergent product inlet section, and/or the divergent product outlet section are wedge shaped lumens.

The present disclosure further provides a continuous vapor integrator (CVI) which is simpler and easier to manufacture and install, and which requires less maintenance due to extended service intervals and in-situ maintenance, thereby providing less downtime. Further, the CVI is easily scaled to a specific process or product, and the CVI may be fully CIP-able both on the product side as well as on the steam side.

This is obtained by a modular CVI, with inlets allowing throughflow for both product and steam, where the modules or parts are designed to accommodate easy disassembling and assembling for maintenance and cleaning of gaps formed between the parts. For example, one or more of the parts may comprise a planar flange that can be aligned, such that the parts may be attached to or detached from each other via the flanges by one or more fastening elements. Hence the modules of the CVI may be assembled by one or more common fastening elements traversing the flanges. Thus, the modular CVI comprises relatively few wear parts.

A second, non-claimed, aspect of the disclosure relates to a modular continuous vapor integrator (CVI) for heat treating a product, comprising:
- an inlet section 1, a jet control body 8, and a flow path defining section 12, wherein the inlet section 1 and the flow path defining section 12 are configured to partly surround the jet control body 8, such that the gap between the jet control body 8 and the flow path defining section 12 forms a convergent product inlet section 3,
- an outlet section 13 comprising one or more vapor channels 14, and a divergent product outlet section 18, wherein the outlet section 13 is configured to partly surround the flow path defining section 12 and the jet control body 8, such that the vapor channels 14 meet the tip of the jet control body 8 at a first acute angle at a transition section T between the convergent product inlet section 3 and the divergent product outlet section 18, thereby forming a first annular product opening 20 at a first end of the transition section, and a second annular product opening 21 at a second end of the transition section.

In a preferred embodiment, the one or more vapor channels are annular or circular, and particularly the vapor channels comprises an annular inlet into the transition section. Further preferably, the convergent product inlet section and the divergent product outlet section are annular at the entrance and exit to the transition section. Alternatively, the one or more vapor channels, the convergent product inlet section, and/or the divergent product outlet section are wedge shaped lumens.

To improve the manufacturing precision and to further facilitate easy disassembling and assembling for maintenance and cleaning, the modular CVI may be assembled based on only two parts: a cover or front plate, and a monolithic unit, where a surface of the monolithic unit comprises lumens configured as respectively a convergent product inlet section, a divergent product outlet section, and vapor channels.

A third, claimed, aspect of the disclosure relates to a modular continuous vapor integrator (CVI) for heat treating a product, comprising a front plate and a monolithic unit, wherein a surface of the monolithic unit comprises one or more lumens configured as convergent product inlet section, one or more lumens configured as divergent product outlet section, and one or more lumens configured as vapor channels, wherein the inlet and outlet sections are separated by a transition section, and the one or more vapor channels are contacting a product flow path at a first acute angle at the transition section, such that the lumen intersection forms a Coanda surface for the product flow within the transition section.

### Description of Drawings

The disclosure will in the following be described in greater detail with reference to the accompanying drawings.
Figure 1 shows a cut-through view of a first embodiment of the CVI apparatus according to the present disclosure.
Figure 2 shows a cut-through view of a second embodiment of the CVI apparatus according to the present disclosure.
Figures 3A and 3B show perspective view of the second embodiment of the CVI in two side views.
Figure 4 shows a perspective exploded view of an embodiment of the CVI according to the present disclosure.
Figure 5 shows a perspective exploded view of an embodiment of the CVI according to the present disclosure.
Figure 6 shows in (A) a cross-sectional view of an embodiment of the CVI apparatus according to the present disclosure, and in (B) a perspective cut-through view of the embodiment in (A), where the apparatus has been cut along the longitudinal direction, and the one half removed.
Figure 7 shows in (A) a cross-sectional view of an embodiment of the CVI apparatus according to the present disclosure, and in (B) a perspective cut-through view of the embodiment in (A), where the apparatus has been cut along the longitudinal direction in the vertical and horizontal direction, and one of the quarter parts removed.
Figure 8 shows a cross-sectional view of an embodiment of the CVI apparatus according to the present disclosure.
Figure 9 shows a perspective exploded view of an embodiment of the CVI according to the present disclosure.

### Detailed description

The disclosure is described below with the help of the accompanying figures. It would be appreciated by the people skilled in the art that the same feature or component of the device are referred with the same reference numeral in different figures. A list of the reference numbers can be found at the end of the detailed description section.

### Definitions

Prior to discussing the present disclosure in further details, the following terms and conventions will first be defined:
"In general" - If a feature or group of features are defined as being "in general", the feature or group of features may be used in combination with all claimed or non-claimed embodiments of the disclosure.
"Housing part" - In the context of the present application a part defined as a housing part has an external surface being accessible to a user during operation of the device.

It should be noted that embodiments and features described in the context of one of the claimed or non-claimed aspects of the present disclosure also apply to the other claimed or non-claimed aspects of the disclosure.

### Transition section

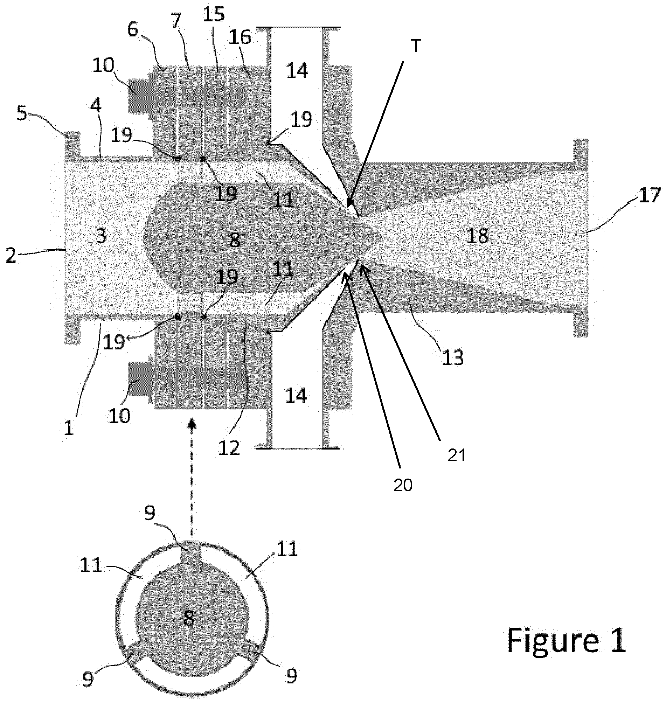

The vapor integration of the CVI of the present disclosure occurs at the transition section **T,** located between a convergent product inlet section **3** and a divergent product outlet section **18,** as sketched in Figure 1. At the transition section, the product flow path is converging with (corresponding to contacted by) a vapor channel **14** at a first acute angle, as indicated in Figure 1, whereby the mixing and/or integration occurs at a central channel wall **8** defining the confluence of the product flow and vapor flow. The acute angle of the confluence is adapted such that the central channel wall 8 forms a Coanda surface for the mixed product flow. By the term "Coanda surface" is meant a surface which a fluid emerging from an orifice will tend to adhere to. Thus, the mixing of product and steam occurs at the narrow flow of product along the Coanda surface, and the mixing and integration therefore occurs completely, instantaneously and without boiling and cavitation. The vapor integration at the narrow Coanda surface provides a more efficient vapor integration, as well as a less noisy vapor integration due to the absence of boiling and cavitation. Thus, the CVI of the present disclosure provides reduced noise pollution and a safer working environment.

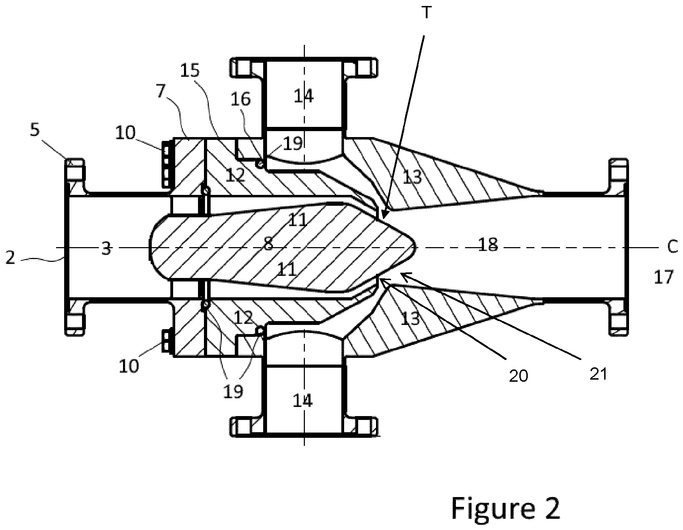

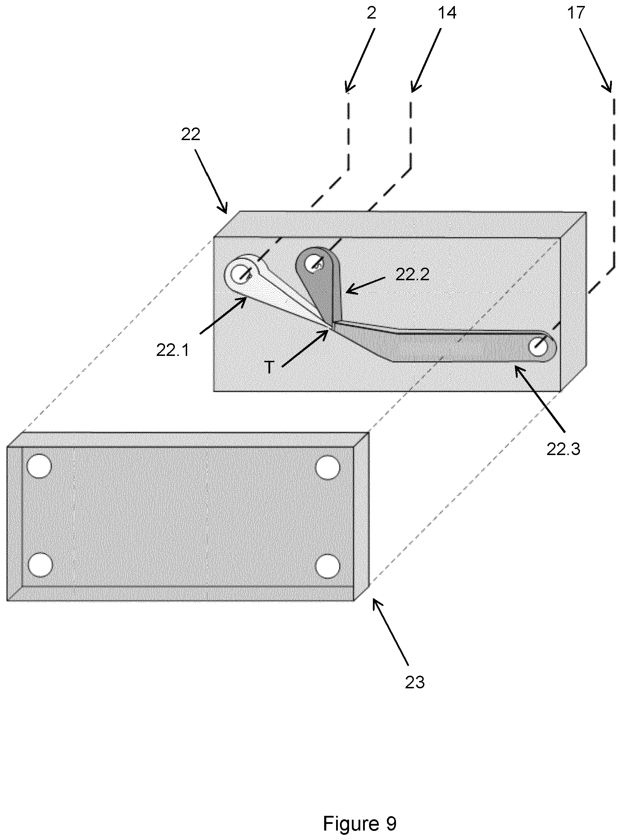

The centre line **C** of the convergent product inlet section and the divergent product outlet section, as indicated in Figure 2, define a product flow path of the CVI from the inlet opening for product **2** to the outlet opening for heated product **17.** Advantageously, the centre line is essentially linear, such that the product flow path is unidirectional, and a more efficient transfer of product is obtained through the channels and gaps of the device. Alternatively, the centre line comprises an essentially linear section, as illustrated in Figure 9. This further facilitates that the CVI is easily scaled to a specific process or product, e.g. products with different viscosities.

In an embodiment of the disclosure, the centre line is essentially linear or comprises an essentially linear section.

To further improve the mixing and/or integration of product and steam at the narrow flow of product along the Coanda surface, the central channel wall **8** advantageously form a second acute angle to the product flow path at the transition section **T,** as indicated in Figures 1-2. The second acute angle is different from, and preferably has a less inclined angle, than the first acute angle between the product flow path and the vapor channels **14** at the transition section.

In an embodiment of the disclosure, the central channel wall forms a second acute angle to the product flow path at the transition zone. In a further embodiment, the first acute angle is larger than the second acute angle.

To further improve the combining (corresponding to mixing and integration) of product and steam at the narrow flow of product along the Coanda surface, and to further reduce the risk of boiling and cavitation at the transition section, a part of the vapor channels **14** are advantageously configured to be convergent towards the transition section **T,** such as the part of the vapor channels immediately before the contact to the transition zone, as illustrated in Figures 1-2. This means that the vapor channels are dimensioned to accelerate the vapor flow rate along the vapor channel towards the transition section, e.g. to a flow rate between 100-200 m/s at the contact to the transition zone.

In an embodiment of the disclosure, the one or more vapor channels are convergent towards the transition section. In a further embodiment, the convergent vapor channels are dimensioned to accelerate the vapor flow rate along at least a part of the channel, optionally to a vapor flow rate of between 100-250 m/s, such as 200 m/s, at the contact to and at the contact time in the transition section.

The Coanda surface occurs at the confluence of the convergent product flow with the vapor flow at the central channel wall **8** within the transition section **T.** It follows that the shape of the Coanda surface for the product flow within the transition section may depend on the shape of the vapor channels **14.** For example, the vapor channels may be annular shaped, as shown in the cross-sectional views of Figures 1-2, such that the vapor channel inlet into the transition section is an annular opening, and the vapor channels accordingly have a tapered cone shape. To facilitate the mixing and integration of product and steam at the narrow flow of product along the Coanda surface, and to reduce the risk of boiling and cavitation occurring at the Coanda surface, the central channel wall **8** and the resulting Coanda surface is advantageously a curved plane, such as a cone shaped surface or a section of a cone surface.

In a preferred embodiment the one or more vapor channels are annular, particularly the vapor channels inlet into the transition section is annular. In a further embodiment, the central channel wall and the Coanda surface is a curved plane, such as a section of a cone surface.

Alternatively, the vapor channels may be or comprise wedge shaped lumens, as sketched in Figure 9 showing a perspective exploded view of an embodiment of the CVI. To facilitate efficient mixing of product and steam at the Coanda surface, the central channel wall **8** and the resulting Coanda surface is advantageously an essentially planar plane. Improved efficiency of the mixing may particularly be obtained with wedge shaped lumens dimensioned for smaller product flows, such as product flows between 30-500 L/h, where the wedge shaped lumens have a width below 10 mm, such as 4 mm.

In another embodiment of the disclosure, the convergent vapor channels are wedge shaped lumens. In a further embodiment, the width of the wedge is between 1-10 mm, more preferably between 2-8 mm, and most preferably between 3-6 mm, such as 4 mm. In a further embodiment, the central channel wall and the Coanda surface is an essentially planar plane.

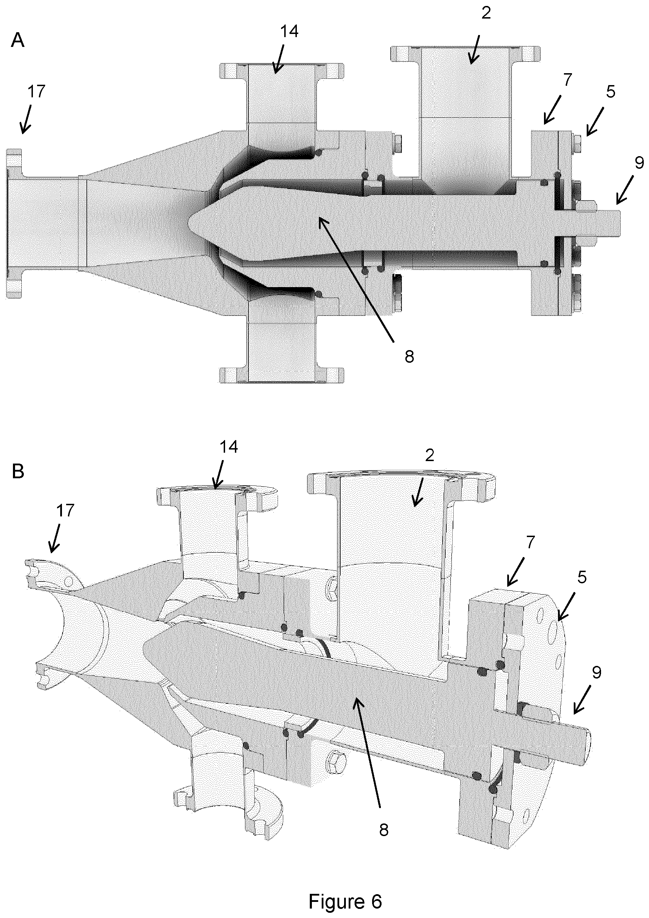

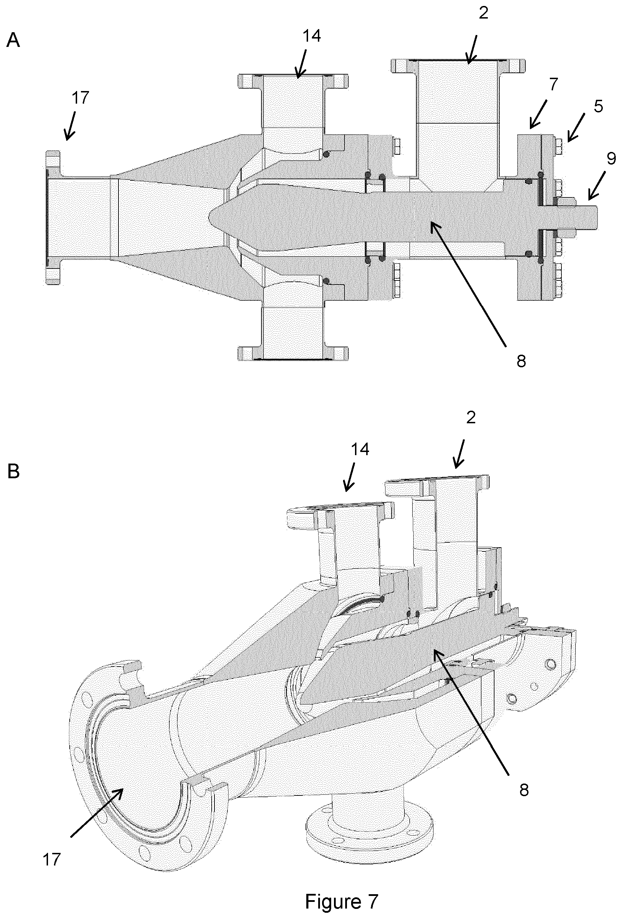

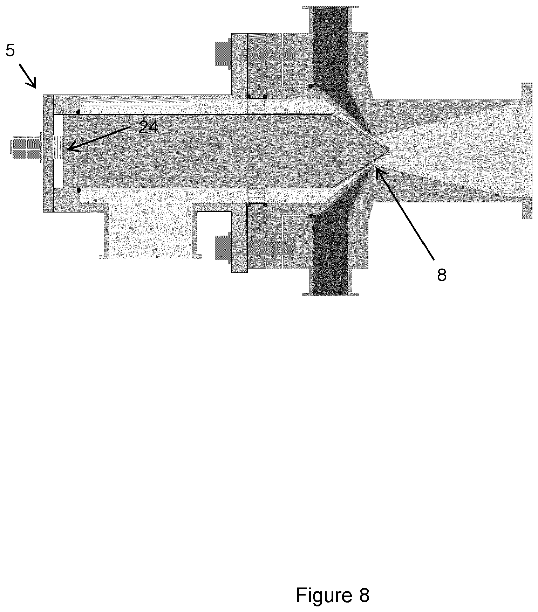

The Coanda surface occurs at the confluence of the convergent product flow with the vapor flow at the central channel wall **8** within the transition section **T,** and it also follows that the Coanda surface for the product flow within the transition section may depend on the configuration of the central channel wall **8.** Specifically, the height of the product flow along the Coanda surface may depend on the position of the central channel wall in the longitudinal direction, as seen in Figures 1-2 and 6-8. For example, as follows from Figure 8, the central channel wall **8** may be displaced along the centre line **C** via a linear displacement mechanism, such a telescopic unit or the insertion or removal of one or more spacers or washers **24.** For example if the central channel wall is displaced to the right, e.g. by insertion of one or more spacers, the height of the product flow along the Coanda surface will decrease. If the central channel wall is displaced to the left, e.g. by removing one or more spacers, the height of the product flow along the Coanda surface will increase, as indicated in Figure 8. A similar displacement mechanism may be a telescopic unit in the form of a shaft comprising a threaded end, as indicated in Figures 6-7.

In an embodiment of the disclosure, the central channel wall is configured to be displaceable along the centre line such that the height of the product flow along the Coanda surface is adjustable. In a further embodiment, the central channel wall is displaced along the centre line via one or more washers, and/or a shaft comprising a threaded end.

Similarly, a part of the convergent product inlet section is advantageously dimensioned to accelerate the product flow rate along at least a part of the channel, at least immediately before the contact to the transition zone, as illustrated in Figures 1-2 and 9. To improve the combining, mixing, and/or integration process along the Coanda surface, the product flow rate is advantageously lower than the vapor flow rate, and preferably at least between a factor 5-15 below the vapor flow rate, such as at least a factor 10 below the vapor flow rate, corresponding to a product flow rate between 10-25 m/s.

In an embodiment of the disclosure, the convergent product inlet section is dimensioned to accelerate the product flow rate along at least a part of the channel, such that the product flow rate is lower than the vapor flow rate at the contact to and at the contact time in the transition section. In a further embodiment, the convergent product inlet section is dimensioned to accelerate the product flow rate along the channel, optionally to a product flow rate of 10-25 m/s, such as 20 m/s, at the contact to and at the contact time in the transition section.

The unidirectional flow pattern of the vapor, product, and mixture facilitates that the CVI according to the present disclosure is easily scaled to a specific process or product, e.g. products with different viscosities. In a preferred embodiment, the CVI is scaled to a milk product, where the flow of product at the inlet opening is between 30-70 ton per hour. In another embodiment, the CVI is scaled down and the product flow channel is dimensioned to a product flow of between 30-500 L/h. Thus for example, the inlet opening for product **2** may be cylindrical, as indicated in Figures 1-2 and 9, and advantageously has a diameter of between 50-200 mm.

In an embodiment of the disclosure, the product flow channel is dimensioned to a product flow of between 30-500 L/h, more preferably between 40-400 L/h, and most preferably between 200-300 L/h, such as 150 L/h.

In an embodiment of the disclosure, the inlet opening for product is cylindrical with a diameter of between 25-200 mm, more preferably between 40-150 mm, such as 70 or 100 mm. However this is always designed as per product specifications.

The CVI may be supplied with product and vapor from external sources, and the exiting heated product may be transferred to an external discharge. To facilitate continuous operation, the CVI inlet opening for product **2,** the inlet for steam **14,** and/or the exit or outlet opening for the heated product **17** may be in fluid communication with a source of product, a vapor source, and a unit for transferring or collecting the discharged heated product. For easy connection and simple product flow path, the inlet opening **2** for the convergent product inlet **13,** and the outlet opening **17** for the divergent product outlet section **18,** may be coaxial and parallel with the centre line **C,** as shown in Figures 1-2. Easy and simple product flow path may also be obtained if the inlet opening for product **2** and steam **14,** and the outlet opening for the heated product **17** comprise a section which are not parallel with the centre line **C,** but form an angle to the centre line, e.g. is perpendicular to the centre line, as shown in Figure 9.

In an embodiment of the disclosure, the inlet opening for product, the inlet for steam, and/or the outlet opening for the heated product comprise a section which are not parallel with the centre line **C.**

It follows that the CVI may include a multiple of vapor channels and related vapor channel inlets into the transition section. For example, the CVI may comprise two vapor channels **14,** located at opposite sides of the central channel wall **8,** as shown in Figures 1-2. A multiple of vapor channels inlets provide the advantage that the CVI is fully CIP-able both on the product side and on the steam side. For example, the steam side may be cleaned-in-place (CIP), i.e. in the fully assembled state, by purging a cleaning fluid through the first vapor channel and further into a second vapor channel.

In an embodiment of the disclosure, the CVI comprises two or more vapor channels and vapor channel inlets, wherein the at least two vapor channels and inlets are located at opposite sides of the central channel wall.

### Modular CVI

The CVI of the present disclosure is advantageously configured as a modular CVI, and vice versa. This provides simpler and easier installation, as well as less maintenance due to extended service intervals and in-situ maintenance. Hence, a modular CVI may have less downtime.

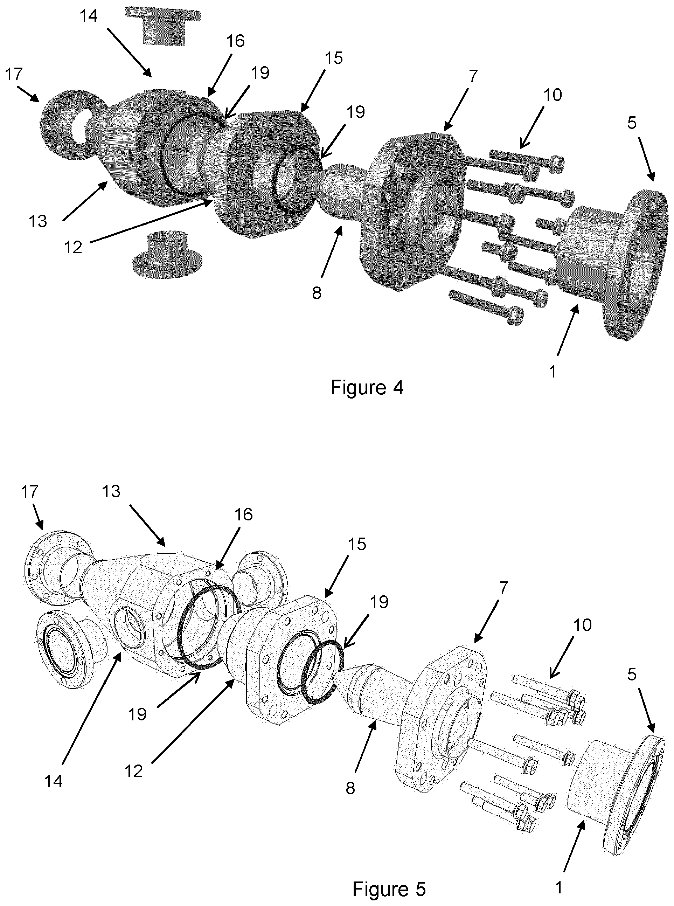

The modules or parts of the CVI according to the present disclosure are adapted for easy and simple disassembling and assembling for maintenance and cleaning of gaps formed between the parts. For example, the multiple parts may be assembled by a single common fastening element 10, as indicated in the exploded views of Figures 4-5. In another example, the multiple parts may be assembled by a common fastening element 10 and in addition a primary fastening means 5, as indicated in Figures 6-8. In a further example, the multiple parts may be assembled by simply attaching a front or cover plate 23, as indicated in Figure 9. Thus, the modular CVI comprises relatively few wear parts. Embodiments of the modular CVI are further described below.

In a first example, the CVI advantageously comprises two main modules, where the first main module forms the convergent product inlet section, and the second main module forms the outlet section. The two main modules are further described below.

### Convergent product inlet section

Figure 1 shows a cut-through view of a first embodiment of a continuous vapor integrator according to the present disclosure. This first embodiment comprises an inlet section 1 comprising a preferably cylindrical inlet opening for product 2, a through-going opening **3** forming a convergent product inlet, a housing part **4** defining the walls of the through-going opening **3** and an external surface, primary fastening means **5** used to fasten the inlet section **1** to a not shown product outlet for product to be heated or an external source of product, and secondary fastening means **6** for fastening the inlet section **1** to a housing part **7** of a jet control body **8.**

The jet control body **8** provides a restriction of the through-going opening **3** and the position of the jet control body **8** defines a restricted annular through-going opening **11** where product flows around the jet control body **8,** as sketched in Figures 1-2. The jet control body **8** may have a first rounded end, such as a spherical rear end, facing the inlet for product **2** and a second more pointed end, such as a conical tip end, facing an outlet for heated product **17.** The surface of the jet control body thus define a central channel wall **8,** or an inner wall.

The jet control body **8** may be fixed to the housing part or flange **7** by fixing means **9** extending between the jet control body **8** and the housing part **7.** In the shown embodiment of Figure 1, the fixing means **9** are constituted of three bridges extending between the outer surface of the jet control body, or the central channel wall, **8** and an inner surface of the housing part **7** across the restricted through-going opening **11.** The fixing means **9** may comprise more or less than 3 bridges e.g. 1, 2, 4, or 5 bridges. However, the fixing means **9** must be strong enough to keep the jet control body **8** in a constant position without moving relative to the housing parts, and also the fixing means **9** should disturb the flow through the restricted annular through-going opening **11** least possible.

A flow path defining section **12** is attached to and in contact with the housing part **7** of the jet control body **8,** the flow path defining section **12** is positioned in such a way that the inner surface of the flow path defining section **12** constitute an outer wall for the restricted through-going opening **11.** The central channel wall **8** of the jet control body constitutes an inner wall for the restricted through-going opening **11.** The flow path defining section **12** comprises a round or cylindrical opening through which the more pointed second end of the jet control body **8** extends forming an annular through-going opening where product to be heated may pass through during operation.

It follows from the above that the first main module forming the convergent product inlet section comprises an inlet section **1,** a jet control body **8,** and a flow path defining section **12,** wherein the inlet section **1** and the flow path defining section **12** are configured to partly surround the jet control body **8,** such that the gap between the surface of the jet control body (also referred to as the central channel wall) **8** and the flow path defining section **12** forms a convergent product inlet section **3.**

As seen from Figures 1-2, the surface of the jet control body constitutes an inner wall for the restricted through-going opening **11** of the flow defining section **12.** The surface of the jet control body also define the central channel wall of the transition section **T,** as indicated in Figures 1-2. The shape and position of the jet control body therefore affect the product flow path and the mixed and heated product flow path.

For improved mixing of product and steam at the narrow flow of product along the Coanda surface, the jet control body 8 is advantageously elongated and positioned in the longitudinal direction of the flow defining section **12** with a tip extending through the flow defining section and into the outlet opening 18. For example, the jet control body advantageously comprises a spherical rear part, and/or a conical tip, where the conical tip extend passed the flow defining section **12** in the longitudinal direction, and into the outlet opening **18,** as most clearly shown in Figure 1.

In an embodiment of the disclosure, the jet control body comprises a conical tip and/or a spherical rear part, wherein preferably the conical tip extends passed the flow defining section in a longitudinal direction, and into the outlet opening.

### Transition section and outlet section

The section where the product flow path meets the vapor channel is referred to as the transition section T. The transition section is located within the outlet section **13,** where it is placed between the convergent product inlet section **3** and the divergent product outlet section **18,** as seen in Figures 1-2. The central channel wall **8** of the jet control body advantageously extends passed the through-going opening of the flow defining section **12** in the longitudinal direction, into the transition section **T,** and further into the divergent outlet opening **18,** as most clearly shown in Figure 1. For a jet control body having a cylindrical and/or conical shape, this means that the product to be heated first passes through a first annular product opening **20** at the inlet, or first end, of the transition section, and then passes through a second annular product opening **21** at the outlet, or second end, of the transition section. The annular openings **20, 21** further facilitates that the mixing and integration of the product flow and vapor flow occurs primarily along a narrow surface layer along the central channel wall **8,** which thereby forms a Coanda surface for the product flow within the transition section. Accordingly, the Coanda surface may be a curved plane, such as a cone shaped surface or a section of a cone surface.

As seen from Figures 1-2, the outlet section **13** is in contact with the flow path defining section **12** and attached to the flow path defining section **12** during operation. The outlet section **13** comprises an inlet for steam or a vapor channel **14,** and in combination with the flow path defining section **12,** an annular inlet opening for steam may be formed downstream of the first annular opening **20** for product to be heated. An external or outward surface of the part of the flow path defining section **12** being closest to the outlet section **13,** defines an internal or inward surface of the inlet for steam **14,** such that the steam channel contacts the product flow at an acute angle, as shown in Figure 1.

Just downstream of the annular inlet opening for steam, the outlet section **13** comprises an inlet for the mixed and heated product, corresponding to the second annular product opening **21.** As shown in Figure 1, the central channel wall **8** of the jet control body, e.g. in the form of a conical or more pointed second end of the jet control body **8,** extends through the inlet for the heated product, thus forming the second annular product opening **21** for heated product.

In an alternative embodiment of the disclosure, the central channel wall **8** of the jet control body, e.g. the more pointed second end of the jet control body **8,** does essentially not extend through the second annular product opening **21,** as indicated in Figure 2. Hence the second annular product opening may be an essentially circular opening.

The heated product is transported through an outlet opening **18** of the outlet section **13** to the outlet **17** for heated product. The outlet opening **18** is normally of a rounded cross-section, e.g. oval or circular, and the outlet opening **18** preferably has an increasing perimeter and may be in shape of a truncated cylinder ensuring both that there is little or no recirculation in an eddy directly at the outlet and that pressure may build up gradually yet sufficiently fast to ensure that no cavitation travel beyond the nozzle point and to a high degree remains entirely absent.

If follows from the above that the main module forming the outlet section **13** comprising one or more vapor channels **14,** and a divergent product outlet section **18,** wherein the outlet section **13** is configured to partly surround the flow path defining section **12** and the jet control body **8,** such that the vapor channels **14** meet the tip of the jet control body **8** at a first acute angle at the transition section **T** between the convergent product inlet section **3** and the divergent product outlet section **18,** thereby forming a first annular product opening **20** at a first end of the transition section, and a second annular product opening **21** at a second end of the transition section. Hence, at the inlet or immediately before the transition section, the product to be heated passes a first nozzle **20** formed by the gap between the flow defining section **12** and the jet control body **8,** and at the exit of the transition section, the mixed and heated product then passes a second nozzle **21** formed by the gap between the jet control body **8** and the outlet section **13,** as indicated in Figure 1.

### Disassembly and cleaning

### Modular CVI assembled by a common fastening element

The assembled parts of the CVI according to the present disclosure may be easily disassembled into the individual parts, as indicated by Figures 4-5 showing perspective exploded views of an embodiment of the CVI. It is seen that the parts are adapted to be aligned, such that the parts may be fixed to each other by a common fastening element **10** extending partly into or across the parts. Advantageously, the fastening elements are configured for detachably attachment, such that the assembly process is similar to the disassembly process. For example, the parts may be assembled by one or more bolts **10** configured to extend through the jet control body **8,** the flow path defining section **12,** and the outlet section **13,** as indicated in Figures 4-5.

To improve the assembly flexibility and cleaning efficiency, the fastening elements may have different configuration, such as different lengths, such that different parts are fixed to each other by different fastening elements. For example, a first set of one or more bolts **10** may be configured to fix the jet control body **8** to the flow path defining section **12.** A second set of one or more bolts are then configured to fix the flow path defining section **12** to the outlet section **13.**

Hence, when the corresponding releasable fastening means are released, the parts are disassembled. For example, the jet control part **8** and the flow path defining section **12** may be disassembled by releasing the first set of bolts, such that it is possible to clean the narrow restricted through-going opening **11** for remaining product e.g. burned product remains, without releasing the second set of bolts.

For easy assembly and alignment of the parts, the parts advantageously comprises a protrusion, such as a flange, where the plane of the flanges may be aligned and fixed to each other by a fastening element. For example, the inlet section **1** comprises a first flange **6,** the jet control body **8** comprises a second flange **7,** the flow path defining section comprises a third flange **15,** the outflow section **13** comprises a fourth flange **16,** as shown in Figures 1 and 5.

To further facilitate the assembly and alignment, the flanges are oriented perpendicular to the product flow path defined by the centre line **C,** and the flanges may then be fixed to each other by a fastening element extending in parallel to the product flow path, e.g. traversing the one or more flanges, as indicated in Figure 5.

In an embodiment of the disclosure, the inlet section comprises a first flange, the jet control body comprises a second flange, the flow path defining section comprises a third flange, the outflow section comprises a fourth flange, wherein the planes of the flanges are configured to be aligned, such that one or more flanges are configured to be detachably or attachably attached by a common fastening element traversing the one or more flanges. In a further embodiment, the planes of the flanges are perpendicular to the centre line of the convergent product inlet section and the divergent product outlet section.

As indicated above, disassembly of the jet control part **8** and the flow path defining section **12** may be particularly relevant, because the narrow restricted through-going opening **11** may be clogged by particulates and in rare incidences non CIP-able substances. Hence, advantageously, the two parts may be disassembled by releasing a first set of bolts without releasing other bolts.

Some of the parts have interfaces which are not prone to clogging, such as the inlet section **1** and the jet control body **8.** To simplify the assembly and disassembly and reduce the number of parts, these parts are advantageously integrated. This way, the number of interfaces and sealings may be reduced. Hence, the CVI body may be assembled by use of only two or three O-rings, as indicated in Figures 4-5.

In an embodiment of the disclosure, the inlet section and the jet control body are integrated.

To improve the assembly flexibility and cleaning efficiency, the fastening elements may have different configuration, such as different lengths, such that different parts are fixed to each other by different fastening elements. To provide uniform fixation forces and to ensure leak proof interfaces between the parts, abutting flanges are advantageously fixed to each other by at least two fastening element, such as two bolts, located at opposite sides of the centre line, as indicated in Figures 4-5.

In an embodiment of the disclosure, the fastening elements are bolts. In a further embodiment, the CVI comprises between 3-20 bolts, more preferably between 6-16 bolts, such as 8, 10 or 12 bolts. In a further embodiment, the length of the bolts are different, such that the bolts may traverse a different number of flange planes.

The assembly and disassembly of the CVI are further described in details below.

Figure 1 shows an embodiment of the disclosure, where the CVI is constituted of four separable sections which sections in the shown embodiment during operation is joined by bolts **10.** The bolts **10** are inserted into and/or through openings in the housing parts of the inlet section **1,** the jet control body **8,** the flow path defining section **12** and the outlet section **13.** However, a first set of bolts **10** may fix the inlet section **1** and the jet control body **8** together, and a second set of bolts **10** may fix the inlet section **1,** the jet control body **8** and the flow path defining section **12** together, and a third set of bolts **10** may fix the inlet section **1,** the jet control body **8,** the flow path defining section **12** and the outlet section **13** together. Having several sets of bolts **10** makes it possible to separate the sections individually during maintenance.

Figure 2 shows an embodiment of the disclosure, where the CVI comprises an inlet section **1** being integrated with the jet control body **8,** i.e. the two parts are combined into a single unit comprising one fastening means in form of the flange **7** constituting the housing part of the jet control body **8.**

Hence, the embodiment of Figure 2 is constituted of three separable sections, an inlet section integrated with a jet control body **8,** a flow path defining section **12,** and an outlet section **13,** and the sections in the shown embodiment during operation is joined by bolts 10. A first set of bolts **10** may fix the inlet section 1 including fix the jet control body **8** and the flow path defining section **12** together, and a second set of bolts **10** may fix the inlet section **1** including fix the jet control body **8,** the flow path defining section **12** and the outlet section **13** together. Having two sets of bolts **10** makes it possible to separate the sections individually during maintenance. Figure 3A and 3B show the second embodiment of the continuous vapor integrator in two side views.

In general, the sections constituting a continuous vapor integrator, i.e. the inlet section **1,** the jet control body **8,** the flow path defining section **12** and outlet section **13,** constituting the apparatus are aligned having a common centre line **C.** This feature makes separation of the sections easier. Two or more sections may be combined in a permanent way if this is suitable as illustrated with the combination of the inlet section **1** and the jet control body **8** in the second embodiment.

An embodiment of the disclosure relates to a continuous vapor integrator comprising
- an inlet section **1** comprising a housing part **4** and a through-going opening **3** for a product flow,
- a jet control body **8** defining a restriction in the through-going opening **3,**
- a flow path defining section **12** and an outlet section **13** each comprising a housing part **15, 16,** and each at least partly defining a restricted through-going opening **11, 18** for product flow and an inlet for steam **14,** and wherein the jet control body **2 is** fixed to a housing part **6, 7** and this housing part **6, 7** is configured to be fastened to corresponding fastening means **15** of the housing part of the flow path defining section **4** during operation.

In a further embodiment, the jet control body **8** is either fixed to the inlet section **1** during operation or is being an integrated part of the inlet section **1.** That the jet control body **8** is being an integrated part of the inlet part **1** means that the two parts are created as a single part e.g., moulded in a single form, and that the two parts cannot be separated without destroying one or both parts.

In a further embodiment, the jet control body **2** is fixed to a flange **6, 7 or** protrusion attached to or being an integrated part of the housing part **4** of the inlet section **1,** and the flange **6, 7** is configured to be fastened to a corresponding flange **15** or opening of the housing part of the flow path defining section **4** e.g., by bolts **10** inserted through or into openings of the flange or housing part **15.**

In an embodiment of the disclosure, the outlet section **13** comprises an inner outlet opening having a rounded cross-section and increasing perimeter, i.e. the inner outlet opening **18** may be shaped as a truncated cylinder.

In an embodiment of the disclosure, the inlet section **1,** the jet control body **8,** the flow path defining section **12** and outlet section **13,** constituting the apparatus are aligned having a common centre line **C.**

### Modular CVI with adjustable jet control body

As described above, the jet control body **8** may be fixed to the housing part or flange **7** by fixing means **9** extending between the jet control body **8** and the housing part **7.** In the embodiment of Figure 1, the fixing means are three bridges extending radially between the central channel wall **8** and an inner surface of the housing part **7.** Thus, the fixing means keep the jet control body **8** in a fixed position within the longitudinal housing, and the fixing means protrude into the product inlet flow **3** through the restricted annular through-going opening **11.**

Advantageously, the jet control body is adjustably attached, such that the position of the tip of the jet control body may be adjusted in a longitudinal direction within the longitudinal housing. Accordingly, the vapor integration zone, and specifically the product flow path and the Coanda surface may be precisely controlled and adjusted to ensure efficient mixing and/or integration of product and steam without boiling and cavitation. Thus, the modular CVI may be adjusted for improving the vapor integration zone for products with different properties, such as different viscosity. For example, the size of the annular product openings **20, 21** may be precisely controlled by adjusting the degree the central channel wall **8** of the jet control body extends passed the through-going opening of the flow defining section **12** in the longitudinal direction, into the transition section **T,** and further into the divergent outlet opening **18,** as e.g. shown in Figures 1-2.

An embodiment of a modular CVI with an adjustable jet control body **8** is shown in Figures 6-8. The jet control body is fixed to the housing part at the proximal end adjacent to the inlet opening for product **2,** via a second flange **7** and fixing means **9,** which may be a shaft in longitudinal extension of the jet control body.

The second flange may for example be a circular end plate or a square flange with chamfered corners, as indicated in Figure 6B, which may be fixed to the housing by the primary fastening means **5** of the inlet section **1.** Accordingly, the housing part **7** of a jet control body **8** comprises a closed end plate of the inlet section **1.** The CVI may be supplied with an external product flow, and it follows that the inlet opening for product **2** accordingly may comprise a section which are not parallel with the centre line **C,** but form an angle to the centre line, e.g. is perpendicular to the centre line, as sketched in Figure 9, such that a product flow may be supplied.

The position of the tip of the jet control body **8** may be adjusted in a longitudinal direction by including one or more spacers or washers **24** at the shaft between the jet control body and the second flange or end plate, as most clearly seen in Figure 8. It further follows that the position of the jet control body may be adjusted by assembling/disassembling the primary fastening means **5,** independent of the common fastening element **10** extending partly into multiple parts and flanges. Alternatively, the fixing means **9** may include a telescopic mechanism for positioning the jet control body **8.** For example the shaft **9** may comprise a threaded end, and by respectively advancing rotation or retraction rotation, the tip of the jet control body may be advanced or retracted. Advantageously, a single rotation may be correlated to a predetermined advancement or retraction, such as 1 mm for each rotation. Thus, the position of the tip of the jet control body may be accurately and precisely controlled from the housing. For further precise positioning, the threaded end may be combined with a fixing element, such as a nut, as indicated in Figures 6-7.

In an embodiment of the disclosure, the second flange is configured to be detachable attached to a proximal end of the inlet section. In a further embodiment, the jet control body is adjustably attached to the second flange such that the position of the tip of the jet control body can be adjusted in a longitudinal direction. In a further embodiment, the jet control body is attached to the second flange via one or more washers, and/or a shaft comprising a threaded end.

The proximally fixed jet control body has the advantage of a more controllable and precise location. Specifically, the jet control body **8** may be precisely fixed on assembly and maintained in a constant position without moving relatively to the housing parts, even during product flow. This may be advantageous for continuous vapour integrators dimensioned for both high and low product flows, such as product flows between 30-500 L/h. The dimensions of the annular openings **20, 21** may be important to control to ensure efficient mixing and/or integration along the Coanda surface for both high and low product flows, as well as product flows with different viscosity.

The proximally fixed jet control body further has the advantage of a lower disturbance degree of the flow in the through-going opening **11** restricted by the jet control body, due to the absence of fixing means for the jet control body **9** within the flow path.

### Modular CVI comprising monolithic unit

An embodiment of a modular CVI comprising a monolithic unit is shown in Figure 9. The CVI is assembled by simply attaching a front plate or cover plate **23** to the monolithic surface, as indicated with finer hatched lines in Figure 9. The monolithic unit is a block with a surface, such as a metal block of e.g. stainless steel, into which lumens are milled out with a cutter, e.g. an angular grinder, such that when the front plate is attached to the surface comprising the lumens, the front plate defines a lateral boundary of the lumens. The surface of the monolithic unit comprises one or more lumens for product **22.1** and thus configured as convergent product inlet section, one or more lumens for outlet of heated product **22.3** and thus configured as divergent product outlet section, and one or more lumens for vapour/steam **22.2** and thus configured as vapor channels, as illustrated in Figure 9, Hence, as for the modular CVI shown in Figures 1-8, a product flow path is defined by the convergent product inlet section and the divergent product outlet section, and the inlet and outlet sections are separated by a transition section, where the vapor channels are contacting the product flow path at a first acute angle, such that the intersection of the lumens may form a Coanda surface for the product flow.

In an embodiment of the disclosure, the front plate is detachably attached to the monolithic unit, such that it defines a lateral boundary of the lumens.

The lumens are milled out of a surface of the monolithic block, and the shape of the lumens and the width of the lumens, corresponding to the cutting depth, may be controlled by the cutter. To obtain efficient mixing at the Coanda surface, the lumens are advantageously wedge shaped tapering towards the intersection of the lumens at the transition section T and the Coanda surface, as shown in Figure 9. Further advantageously, the cutting depth is below 10 mm to ensure an efficient manufacturing process, Hence, the CVI is advantageously dimensioned for smaller product flows, such as product flows between 30-500 L/h.

In an embodiment of the disclosure, the lumens are milled out with a cutter, such as an angular grinder. In a further embodiment, the lumens are wedge shaped tapering towards the intersection of the lumens, and/or the width of the wedge is between 1-10 mm, more preferably between 2-8 mm, and most preferably between 3-6 mm, such as 4 mm.

All embodiments of the CVI and modular CVI according to the present disclosure advantageously comprise parts made of, or comprising, corrosion resistant materials, to ensure high durability and chemical resistance, when operated with steam and products for the food industry. For example, the parts may be made of stainless steel. Stainless steel further has the advantage of being suitable for precise milling out, and hence the monolithic unit and optionally the cover plate comprise stainless steel.

In an embodiment of the disclosure, the cover plate and/or the monolithic unit comprise stainless steel, and preferably consist of stainless steel.

**Reference numbers**

| **Ref. no.** | **Reference name** |
|---|---|
| 1 | Inlet section |
| 2 | Inlet opening for product |
| 3 | Through-going opening (convergent product inlet) |
| 4 | Housing part of inlet part |
| 5 | Primary fastening means |
| 6 | Secondary fastening means (first flange) |
| 7 | Housing part of jet control body (second flange) |
| 8 | Jet control body (central channel wall) |
| 9 | Fixing means for jet control body |
| 10 | Bolts |
| 11 | Through-going opening restricted by jet control body |
| 12 | Flow path defining section |
| 13 | Outlet section |
| 14 | Inlet for steam (vapor channel) |
| 15 | Fastening means for flow path defining section (third flange) |
| 16 | Fastening means for outlet section (fourth flange) |
| 17 | Outlet opening for heated product |
| 18 | Outlet opening (divergent product outlet section) |
| 19 | Sealings (O-rings) |
| 20 | First annular product opening |
| 21 | Second annular product opening |
| 22 | Monolith |
| 22.1 | Lumen for product |
| 22.2 | Lumen for steam |
| 22.3 | Lumen for outlet of heated product |
| 23 | Cover plate |
| 24 | Washer |
| C | Common centre line |
| T | Transition section |

## Claims

1. A modular continuous vapor integrator (CVI) for heat treating a product, comprising a front plate (23) and a monolithic unit (22), wherein a surface of the monolithic unit comprises one or more lumens (221.1, 22.2, 22.3) configured as convergent product inlet section, one or more lumens configured as divergent product outlet section, and one or more lumens configured as vapor channels, wherein the inlet and outlet sections are separated by a transition section (T) and the one or more vapor channels are contacting a product flow path at a first acute angle at the transition section, such that the lumen intersection forms a Coanda surface for the product flow within the transition section.

2. The modular CVI according to claim 1, wherein the lumens are milled out with a cutter, such as an angular grinder.

3. The modular CVI according to claim 1 or 2, wherein the lumens are wedge shaped tapering towards the intersection of the lumens, and/or wherein the width of the wedge is between 1-10 mm, more preferably between 2-8 mm, and most preferably between 3-6 mm, such as 4 mm.

4. The modular CVI according to any of the preceding claims, wherein the front plate is detachably attached to the monolithic unit, such that it defines a lateral boundary of the lumens.

5. The modular CVI according to any of the preceding claims, wherein the cover plate and/or the monolithic unit comprise stainless steel, and preferably consist of stainless steel.

## Patentansprüche

1. Modularer kontinuierlicher Dampfintegrator (CVI) zur Wärmebehandlung eines Produkts, umfassend eine Frontplatte (23) und eine monolithische Einheit (22), wobei eine Oberfläche der monolithischen Einheit ein oder mehrere Lumina (221.1, 22.2, 22.3), konfiguriert als konvergenter Produkteinlassabschnitt, ein oder mehrere Lumina, konfiguriert als divergenter Produktauslassabschnitt, und ein oder mehrere Lumina, konfiguriert als Dampfkanäle, umfasst, wobei der Einlass- und Auslassabschnitt durch einen Übergangsabschnitt (T) getrennt sind und der eine oder die mehreren Dampfkanäle einen Produktströmungspfad in einem ersten spitzen Winkel am Übergangsabschnitt kontaktieren, derart, dass die Lumenkreuzung eine Coanda-Fläche für den Produktstrom innerhalb des Übergangsabschnitts bildet.

2. Modularer CVI nach Anspruch 1, wobei die Lumina mit einem Fräser, wie z. B. einem Winkelschleifer, ausgefräst sind.

3. Modularer CVI nach Anspruch 1 oder 2, wobei die Lumina keilförmig zur Kreuzung der Lumina hin zulaufen, und/oder wobei die Breite des Keils zwischen 1-10 mm, bevorzugter zwischen 2-8 mm, und am meisten bevorzugt zwischen 3-6 mm, wie z. B. 4 mm, liegt.

4. Modularer CVI nach einem der vorhergehenden Ansprüche, wobei die Frontplatte lösbar an der monolithischen Einheit angebracht ist, derart, dass sie eine seitliche Begrenzung der Lumina definiert.

5. Modularer CVI nach einem der vorhergehenden Ansprüche, wobei die Abdeckplatte und/oder die monolithische Einheit Edelstahl umfassen und vorzugsweise aus Edelstahl bestehen.

## Revendications

1. Intégrateur de vapeur continu (IVC) modulaire pour le traitement thermique d'un produit, comprenant une plaque avant (23) et une unité monolithique (22), dans lequel une surface de l'unité monolithique comprend une ou plusieurs lumières (221.1, 22.2, 22.3) configurées comme section d'entrée de produit convergente, une ou plusieurs lumières configurées comme section de sortie de produit divergente, et une ou plusieurs lumières configurées comme canaux de vapeur, dans lequel les sections d'entrée et de sortie sont séparées par une section de transition (T) et le ou les canaux de vapeur sont en contact avec un trajet d'écoulement de produit selon un premier angle aigu au niveau de la section de transition, de telle sorte que l'intersection des lumières forme une surface à effet Coanda pour l'écoulement de produit au sein de la section de transition.

2. IVC modulaire selon la revendication 1, dans lequel les lumières sont fraisées avec un outil de coupe, tel qu'une meuleuse d'angle.

3. IVC modulaire selon la revendication 1 ou 2, dans lequel les lumières sont en forme de coin se rétrécissant vers l'intersection des lumières, et/ou dans lequel la largeur du coin est comprise entre 1 et 10 mm, de préférence entre 2 et 8 mm, et de manière préférée entre toutes entre 3 et 6 mm, par exemple 4 mm.

4. IVC modulaire selon l'une quelconque des revendications précédentes, dans lequel la plaque avant est fixée amovible à l'unité monolithique, de telle sorte qu'elle définit une limite latérale des lumières.

5. IVC modulaire selon l'une quelconque des revendications précédentes, dans lequel la plaque de recouvrement et/ou l'unité monolithique comprennent de l'acier inoxydable, et sont de préférence constituées d'acier inoxydable.
